# EUROPÄISCHE PATENTANMELDUNG

(11) **EP 4 697 231 A1**
(43) Veröffentlichungstag der Anmeldung: **18.02.2026**
(21) Anmeldenummer: 24194164.0
(22) Anmeldetag: 12.08.2024
(51) Int. Cl.: G06K 7/10, G06K 7/14

(54) **VERFAHREN ZUR DECODIERUNG EINES MASCHINENLESBAREN CODES UND DECODIERVORRICHTUNG**

(71) Anmelder: SICK AG, 79183 Waldkirch (DE)
(72) Erfinder: Weber, Helmut, 79312 Emmendingen (DE)
(74) Vertreter: Manitz Finsterwald Patent- und Rechtsanwaltspartnerschaft mbB

(57) **Zusammenfassung**

Die Erfindung betrifft ein Verfahren zur Decodierung eines maschinenlesbaren Codes, umfassend das maschinelle Erzeugen eines Eingangsbilds des maschinenlesbaren Codes, wobei das Eingangsbild eine Vielzahl von Bildpixeln mit einem jeweiligen Wert aufweist, wobei die Abfolge der Werte der Bildpixel einen Eingangssignalverlauf definiert, wobei der Eingangssignalverlauf Signalbereiche umfasst, die jeweils die Signalenergie in einem zugehörigen Signalbereich repräsentieren. Das Verfahren umfasst das Transferieren der Signalenergie zumindest eines ersten Signalbereichs zu einem zweiten Signalbereich, wobei durch das Transferieren der Signalenergie ein Ergebnissignalverlauf erzeugt wird. Schließlich umfasst das Verfahren das Decodieren des maschinenlesbaren Codes anhand des Ergebnissignalverlaufs.

## Beschreibung

Die vorliegende Erfindung betrifft ein Verfahren zur Decodierung eines, beispielsweise maschinenlesbaren, Codes, bei welchem ein Eingangsbild des maschinenlesbaren Codes maschinell erzeugt wird, wobei das Eingangsbild eine Vielzahl von Bildpixeln mit einem jeweiligen Wert aufweist, wobei die Abfolge der Werte der Bildpixel einen Eingangssignalverlauf definiert, wobei der Eingangssignalverlauf Signalbereiche umfasst, die jeweils die Signalenergie in einem zugehörigen Signalbereich repräsentieren.

Die Decodierung maschinenlesbarer Codes, wie beispielsweise Barcodes oder QR-Codes ist in einer Vielzahl von Anwendungen notwendig. Diese Codes können aus Codemodulen bestehen, die z.B. weiß oder schwarz sind. Herkömmlicherweise wird der Code dabei mit einer Kamera oder einem Barcodescanner erfasst. Die Kamera oder der Barcodescanner erfassen dabei ein Grauwertbild, dass zur Decodierung des maschinenlesbaren Codes in ein Binärbild umgewandelt wird.

Dazu werden die Grauwerte mit einem Schwellenwert verglichen, um die verschiedenen Grauwerte dann entweder als weiß bzw. als "1" oder als schwarz bzw. als "0" einzustufen, wodurch das Binärbild erzeugt werden kann.

Aufgrund von Unschärfe durch Abbildungsfehler oder Bewegung, Rauschen, Helligkeitsschwankungen, sehr kleinen Codemodulen und dergleichen können Bereiche in dem Grauwertbild falsch ausgewertet werden - insbesondere wenn Signalbereiche einzelner Codemodule gegen die Bildpixelkanten verschoben sind -, was zu Fehlern in der Decodierung des maschinenlesbaren Codes führen kann.

Es ist daher die der Erfindung zugrundeliegende Aufgabe, ein Verfahren anzugeben, welches die Decodierung eines maschinenlesbaren Codes verbessert.

Diese Aufgabe wird durch ein Verfahren gemäß Anspruch 1 gelöst.

Das erfindungsgemäße Verfahren umfasst das maschinelle Erzeugen eines Eingangsbildes des, beispielsweise maschinenlesbaren, Codes, wobei das Eingangsbild eine Vielzahl von Bildpixeln mit einem jeweiligen Wert aufweist, wobei die Abfolge der Werte der Bildpixel einen Eingangssignalverlauf definiert, wobei der Eingangssignalverlauf Signalbereiche umfasst, die jeweils die Signalenergie, insbesondere eines der Bildpixel, bevorzugt genau eines der Bildpixel, in einem zugehörigen Signalbereich repräsentieren. Das erfindungsgemäße Verfahren umfasst ferner das Transferieren der Signalenergie zumindest eines ersten Signalbereichs zu einem zweiten Signalbereich, wobei durch das Transferieren der Signalenergie ein Ergebnissignalverlauf erzeugt wird. Schließlich umfasst das erfindungsgemäße Verfahren das Decodieren des, beispielsweise maschinenlesbaren, Codes anhand des Ergebnissignalverlaufs. Bei dem Ergebnissignalverlauf kann es sich z.B. um ein Ergebnisbild handeln, insbesondere um ein Binärbild.

Erfindungsgemäß wird also die Signalenergie eines ersten Signalbereichs in einen zweiten Signalbereich transferiert. Allgemein wird durch das Transferieren der Eingangssignalverlauf verändert, beispielsweise indem die Signalenergie des ersten Signalbereichs und die Signalenergie des zweiten Signalbereichs zusammengefasst werden. Insbesondere wird die Signalenergie des ersten Signalbereichs also dem zweite Signalbereich zugeschlagen. Beispielsweise kann die Signalenergie eines Signalbereichs, welcher herkömmlicherweise als schwarz bzw. 0 identifiziert wird, an einen Signalbereich übertragen, d. h. transferiert, werden, welcher herkömmlicherweise als weiß bzw. 1 identifiziert wird. Auf diese Weise geht die in dem erste Signalbereich enthaltene Signalenergie bei der Auswertung des maschinenlesbaren Codes nicht verloren. Die Decodierung des maschinenlesbaren Codes kann auf diese Weise verbessert werden, indem z.B. die Position der Codemodule genauer bestimmbar wird. Es versteht sich, dass nicht nur die Signalenergie eines "schwarzen" Signalbereichs zu einem "weißen" Signalbereich transferiert werden kann, sondern auch zwischen zwei schwarzen Signalbereichen oder zwei weißen Signalbereichen.

Insbesondere kann durch das Transferieren ein Ergebnissignalbereich mit konstanter Höhe (über den Ergebnissignalbereich) erzeugt werden. Durch das Transferieren kann beispielsweise dem Umstand Rechnung getragen werden, dass ein Codemodul des maschinenlesbaren Codes hauptsächlich im Bereich eines Bildpixels angeordnet ist, sich aber bereichsweise noch in den Bereich eines benachbarten Bildpixels erstreckt. Der benachbarte Bildpixel kann beispielsweise seine Signalenergie in den erste Signalbereich abbildet. Der erste Bildpixel kann seine Signalenergie in den genannten zweiten Signalbereich abbilden, sodass die Signalenergie des benachbarten Bildpixels dann durch das Transferieren dem ersten Bildpixel zugeschlagen wird. Der Signalbereich nach dem Transferieren, d.h. der Signalbereich in dem Ergebnissignalverlauf, kann dann insbesondere breiter sein und einen konstanten Wert über seine Breite aufweisen, wodurch dann das Codemodul in dem Ergebnissignalverlauf besser abgebildet wird und wodurch sich eine vereinfachte und weniger fehleranfällige Decodierung des maschinenlesbaren Codes ergibt da der transferierte Signalbereich unabhängig von den Bildpixeln wird.

Wie später noch genauer ausgeführt, kann das maschinelle Erzeugen des Eingangsbild des maschinenlesbaren Codes mit einer Kamera, insbesondere einer Flächen- oder auch Zeilenkamera, oder einem Scanner erfolgen. Das Eingangsbild weist eine Vielzahl von Bildpixeln mit einem jeweiligen Wert auf. Das Eingangsbild kann dabei eindimensional, also eine einzelne Reihe von Bildpixeln aufweisend, oder zweidimensional, d.h. ein zweidimensionales Array von Bildpixeln aufweisend, ausgebildet sein. Jedem oder zumindest einer Vielzahl von Bildpixeln ist bevorzugt ein jeweiliger Wert, insbesondere ein Grauwert zugewiesen, welcher beispielsweise die Helligkeit des Eingangsbilds im Bereich desjenigen Bildpixels definiert. Jedem oder mehreren Bildpixeln können auch mehrere Werte zugewiesen sein, beispielsweise bei einem Farbbild. Durch die Helligkeit kann insbesondere auch die Signalenergie für den jeweiligen Bildpixel codiert sein. Beispielsweise ist die Signalenergie umso höher, je höher die Helligkeit des Bildpixels ist. Insbesondere kann die Helligkeit eines Bildpixels umso höher sein, je mehr Photonen ein dem Bildpixel zugeordneter Sensorpixel eingefangen hat.

Aus der, beispielsweise eindimensionalen oder zweidimensionalen, Abfolge der Werte der Bildpixel kann ein Eingangssignalverlauf definiert werden, welcher entsprechend auch eindimensional oder zweidimensional sein kann. Der Eingangssignalverlauf umfasst Signalbereiche, die die jeweilige Signalenergie, insbesondere eines der Bildpixel, repräsentieren. Der Eingangssignalverlauf besitzt damit bevorzugt in einem Signalbereich jeweils die gleiche Höhe. Der Signalbereich im Eingangssignalverlauf besitzt insbesondere eine Breite, die dem Teil des Eingangssignalverlaufs entspricht, welcher dem jeweiligen Bildpixel zugeordnet ist.

Es sei darauf hingewiesen, dass hierin von der Höhe und der Breite von Signalen in dem Eingangssignalverlauf und dem Ergebnissignalverlauf gesprochen wird. Der Eingangssignalverlauf und der Ergebnissignalverlauf sind Repräsentationen von Signalen. Die Höhe meint dabei den jeweiligen Wert des Signals, also den Wert auf der Y-Achse bzw. der Ordinate. Die Höhe des Signals kann beispielsweise durch die Helligkeit eines jeweiligen Bildpixels definiert sein. Die Breite meint dabei insbesondere die Erstreckung auf der X-Achse bzw. der Abszisse. Die Breite eines Signalbereichs kann dabei die, insbesondere metrische, Breite eines Bildpixels und/oder eines Sensorpixels repräsentieren. Für zweidimensionale Signale, beispielsweise Bilder, kann statt der Breite auch die Fläche gemeint sein, über der das Signal eine, insbesondere gleichbleibende, Höhe aufweist. Zur Vereinfachung wird nachfolgend oft lediglich von der Breite gesprochen, dabei ist aber jeweils auch eine Fläche gemeint.

Bevorzugt werden hierin jeweils die relativen Breiten verwendet, da im Ergebnis die absolute metrische Breite der Signale nicht relevant sein muss. Stattdessen sind insbesondere die relativen Breiten zueinander entscheidend.

Die Signalenergie in einem Signalbereich ergibt sich insbesondere als Fläche unter dem Signalverlauf.

Ein Signalbereich ist insbesondere ein Bereich des Eingangssignalverlaufs und/oder des Ergebnissignalverlaufs, welcher durchgehend denselben Signalwert oder zumindest im Wesentlich denselben Signalwert, d.h. dieselbe Höhe, aufweist.

Beim Transferieren der Signalenergie zumindest eines ersten Signalbereichs zu einem zweite Signalbereich wird also die Fläche des zweiten Signalbereichs vergrößert, wodurch die hinzugefügte Signalenergie repräsentiert wird. Es versteht sich, dass bei dem Transferieren der Signalenergie lediglich eine Berechnung durchgeführt wird, es werden aber beispielsweise keine von den maschinenlesbaren Codes empfangenen Photonen transferiert.

Weiterhin versteht es sich, dass hierin beispielhaft die Signalenergie eines ersten Signalbereichs zu einem zweite Signalbereich übertragen wird. Es ist aber auch möglich, dass die Signalenergie einer Vielzahl von (ersten) Signalbereichen zu verschiedenen (zweiten) Signalbereichen transferiert wird. Der entsprechende Verfahrensschritt kann dafür dann wiederholt werden.

Durch das Transferieren der Signalenergie wird der Eingangssignalverlauf verändert, sodass der Ergebnissignalverlauf erzeugt wird. Das Decodieren des maschinenlesbaren Codes erfolgt bevorzugt anhand des Ergebnissignalverlaufs. Hierzu kann der Ergebnissignalverlauf beispielsweise in ein Ergebnisbild und/oder in ein Binärbild bzw. mathematisch gesprochen in einen Vektor / eine Matrix umgewandelt werden.

Insbesondere kann jeweils derjenige Signalbereich als der erste Signalbereich angesehen werden, welcher weniger Signalenergie enthält. Beim Zusammenfügen von zwei Signalbereichen ist dann dementsprechend derjenige Signalbereich mit mehr Signalenergie der zweite Signalbereich. Alternativ ist es auch möglich, denjenigen Signalbereich mit mehr Signalenergie als den ersten Signalbereich anzusehen. Dabei kann dann ein Abschlag vom energiereicheren zum energieärmeren Bereich erfolgen.

Vorteilhafte Weiterbildungen der Erfindung sind der Beschreibung, den Zeichnungen sowie den abhängigen Ansprüchen zu entnehmen.

Gemäß einer ersten vorteilhaften Ausführungsform wird die von dem zumindest einen ersten Signalbereich an den zweiten Signalbereich transferierte Signalenergie dem zweiten Signalbereich hinzugefügt und/oder aus dem ersten Signalbereich entfernt. Bevorzugt wird sämtliche Signalenergie von dem ersten Signalbereich an den zweiten Signalbereich transferiert. Der zweite Signalbereich enthält nach dem Transferieren dann mehr Energie, der erste Signalbereich weniger, wobei der erste Signalbereich bevorzugt auf 0 abgesenkt wird.

Wie nachfolgend noch beschrieben wird, kann sich die Breite und/oder Position des zweiten Signalbereichs durch das Transferieren verändern, sodass sich der zweite Signalbereich dann in den Bereich hinein ausdehnt, in welchem ursprünglich der erste Signalbereich angeordnet war.

Gemäß einer weiteren Ausführungsform wird die Höhe des Eingangssignalverlaufs in dem zweite Signalbereich auf einen vorbestimmten Maximalwert angehoben, wobei dabei die durch den zweite Signalbereich repräsentierte Signalenergie bevorzugt konstant bleibt. Bei dem vorbestimmten Maximalwert kann es sich beispielsweise um einen 100%-Wert oder um "1" handeln. Bevorzugt bleibt die Fläche unter dem zweiten Signalbereich, also die Signalenergie, gleich, wobei die Breite des zweiten Signalbereichs verkleinert wird, während die Höhe vergrößert wird. Die Höhe wird insbesondere auf den vorbestimmten Maximalwert erhöht.

Das Anheben der Höhe des Eingangssignalverlaufs in dem zweiten Signalbereich erfolgt bevorzugt bevor die Signalenergie des ersten Signalbereichs an den zweite Signalbereich transferiert wird. Alternativ ist es auch möglich, die Höhe des zweiten Signalbereichs nach dem Transferieren auf den vorbestimmten Maximalwert anzuheben, wodurch dann eine Anpassung des Ergebnissignalverlaufs erfolgt. Die Fläche unter dem zweiten Signalbereich in dem Ergebnissignalverlauf kann dabei ebenfalls konstant bleiben.

Erfolgt das Anheben des zweiten Signalbereichs auf den vorbestimmten Maximalwert in dem Eingangssignalverlauf (also vor dem Transferieren), so kann das auf den Maximalwert angehobene und in der Breite verkleinerte Signal des zweiten Signalbereichs so verschoben werden, dass es an der Grenze zwischen dem ursprünglichen ersten Signalbereich und dem ursprünglichen zweiten Signalbereich, d.h. an der Grenze zwischen dem erste Signalbereich und dem zweite Signalbereich aus dem Eingangssignalverlauf, anliegt und/oder endet. Eine derartige Verschiebung ist sowohl bei einem eindimensionalen Eingangssignalverlauf als auch bei einem zweidimensionalen Eingangssignalverlauf möglich.

Gemäß einer weiteren Ausführungsform wird die Signalenergie des zumindest einen ersten Signalbereichs in ein, bevorzugt konstantes, Transfersignal mit Höhe des vorbestimmten Maximalwerts umgewandelt. Wenn der zweite Signalbereich ebenfalls eine Höhe mit Wert des vorbestimmten Maximalwerts besitzt, kann das Transfersignal dann direkt an den auf diese Weise angehobenen zweite Signalbereich angefügt werden und verbreitert damit den zweite Signalbereich. Die Umwandlung in das Transfersignal kann ein Zwischenschritt in dem Transferieren der Signalenergie sein. Das angehobene Signal eines Signalbereichs kann zugleich auch als Transfersignal angesehen werden. Die Verbreiterung des Signalbereichs kann insbesondere auch relativ zu dem Transfersignal sein, d.h. der durch das Transferieren geschaffene verbreiterte zweite Signalbereich, d.h. der Ergebnissignalbereich, kann insbesondere breiter als das Transfersignal (des zweiten Signalbereichs) sein.

Alternativ ist es auch möglich, die Signalenergie des zumindest einen ersten Signalbereichs in ein, bevorzugt konstantes, Transfersignal mit Höhe des zweiten Signalbereichs (also ohne ein Anheben der Höhe des zweiten Signalbereichs) umzuwandeln. Auch dieses Transfersignal kann die Signalenergie des zumindest einen ersten Signalbereichs vollständig umfassen. Das so gestaltete Transfersignal kann dann an den (ursprünglichen) zweiten Signalbereich angefügt werden. Der so entstehende zweite Signalbereich des Ergebnissignalverlaufs kann dann gegebenenfalls noch auf den vorbestimmten Maximalwert angehoben werden, wie oben beschrieben.

Gemäß einer weiteren Ausführungsform wird durch das Transferieren der Signalenergie der zweite Signalbereich in dem Ergebnissignalverlauf verbreitert. Durch das Verbreitern kann entweder die Gesamtbreite des zweiten Signalbereichs vergrößert werden. Der zweite Signalbereich kann also breiter sein als vorher, insbesondere breiter als der zweite Signalbereich in dem Eingangssignalverlauf.

Gemäß einer weiteren Ausführungsform liegt ein Übergang zwischen dem zweiten Signalbereich des Ergebnissignalverlaufs und einem weiteren Signalbereich des Ergebnissignalverlaufs innerhalb eines Signalbereichs des Eingangssignalverlaufs, also insbesondere nicht an einer Kante bzw. Grenze eines Signalbereichs.

Insbesondere durch die Verbreiterung des zweiten Signalbereichs kann eine "Flanke", d.h. ein Ende des zweiten Signalbereichs innerhalb eines Pixels liegen. Auf diese Weise kann eine Sub-Pixel-Genauigkeit erzielt werden, wodurch eine genauere und zuverlässigere Decodierung des maschinenlesbaren Codes möglich wird. Es versteht sich, dass auch zwei Übergänge von Signalbereichen innerhalb eines einzelnen Pixels liegen können, insbesondere wenn ein beidseitiges "Beschneiden" erfolgt.

Gemäß einer weiteren Ausführungsform definiert der Eingangssignalverlauf Werte für einen eindimensionalen oder zweidimensionalen Bereich. Der Eingangssignalverlauf kann beispielsweise aus einem Zeilenscan eines Barcodes stammen und dementsprechend einen eindimensionalen Bereich definieren. Alternativ kann der Eingangssignalverlauf aus einem Flächenscan stammen, bei welchen z.B. ein QR-Code abgetastet wurde und dementsprechend einem zweidimensionalen Bereich definieren und repräsentieren.

Anstelle auf einen maschinenlesbaren Code, ist es auch möglich das Verfahren auf andere Codes (d.h. prinzipiell jegliche Strukturen) anzuwenden, beispielsweise bei OCR-Verfahren (Optical Character Recognition) oder bei Messaufgaben in der Bildanalyse. Bei OCR-Verfahren kann der Transfer von Signalenergie dazu verwendet werden, möglicherweise verschwommene Kanten von Buchstaben klarer herauszuarbeiten. Das Verfahren (und die später genannte Decodiervorrichtung) können daher bei der Abbildung jeglicher Strukturen angewandt werden für deren maschineller Weiterverwertung die Diskretisierung auf Bildpixelgröße nicht ausreicht.

Gemäß einer weiteren Ausführungsform besitzt der erste Signalbereich in dem Eingangssignalverlauf zumindest zwei benachbarte Signalbereiche, wobei derjenige benachbarte Signalbereich als zweiter Signalbereich ausgewählt wird, welcher den geringsten Unterschied der Signalenergie zu dem ersten Signalbereich aufweist. Es wird also z.B. derjenige benachbarte Signalbereich als zweiter Signalbereich ausgewählt, dessen Höhe sich am wenigsten von dem ersten Signalbereich unterscheidet. Bei einem derartigen Vorgehen ist es dann sehr wahrscheinlich, dass das Signal in dem ersten und zweiten Signalbereich von demselben Codemodul des maschinenlesbaren Codes stammt und dementsprechend auch zusammen decodiert werden sollte.

Die Auswahl des zweiten Signalbereichs anhand des geringsten Unterschieds der Signalenergie zu dem erste Signalbereich ist sowohl bei eindimensionalen als auch bei zweidimensionalen Eingangssignalverläufen möglich. Wird bei zweidimensionalen maschinenlesbaren Codes beispielsweise von quadratischen oder rechteckigen Sensorpixeln und Bildpixeln und damit von rechteckigen oder quadratischen Signalbereichen ausgegangen, so besitzt jeder Signalbereich acht benachbarte Signalbereiche, von welchen einer ebenfalls anhand des oben genannten Kriteriums ausgewählt werden kann.

Alternativ ist es auch möglich, bei zweidimensionalen Eingangssignalverläufen einen Schwerpunkt basierend auf der Signalenergie der acht benachbarten Signalbereiche und des ersten Signalbereichs zu bilden, wobei der Schwerpunkt also aus neun Signalbereichen gebildet wird. Es kann dann derjenige benachbarte Signalbereich als zweiter Signalbereich ausgewählt werden, welcher sich am nächsten zu dem Schwerpunkt befindet.

Alternativ oder zusätzlich ist es auch möglich, den zweiten Signalbereich derart auszuwählen, dass im Ergebnissignalverlauf eine äquidistante Verteilung der Signalbereiche bzw. der zugeordneten Transfersignale entsteht. Dies ist insbesondere vorteilhaft, wenn der maschinenlesbare Code Codeelemente jeweils gleicher Größe aufweist. Die Signalbereiche des Ergebnissignalverlaufs stellen dann mit hoher Wahrscheinlichkeit exakt die Codeelement des Codes dar.

Ebenfalls ist es möglich, das Transferieren und auch die Auswahl des zweiten Signalbereichs iterativ durchzuführen. Dies bedeutet, dass in einem ersten Iterationsschritt die Signalenergie eines ersten Signalbereichs zu einem zweite Signalbereich transferiert wird. In einem zweiten Iterationsschritt kann dann die Signalenergie zumindest eines neuen ersten Signalbereichs zu einem neuen zweite Signalbereich transferiert werden. Der neue erste Signalbereich und/oder der neue zweite Signalbereich können in dem ersten Iterationsschritt erzeugt worden sein. Es können auch mehr als zwei Iterationsschritte nach dem vorbeschriebenen Muster durchgeführt werden.

Allgemein versteht es sich, dass für eine Vielzahl von Signalbereichen oder für alle Signalbereiche in dem Eingangssignalverlauf nacheinander überprüft wird, ob deren Signalenergie zu einem anderen Signalbereich transferiert werden soll.

Bei dem hierin beschriebenen Verfahren werden also Bereiche im Signalverlauf aufgefunden, bei welchen die korrekte Zuordnung von schwarzen und weißen Codemodulen möglich ist. Somit kann in diesen Bereichen die tatsächliche Größe der Codemodule sehr genau bestimmt werden. Basierend auf der ermittelten Grö-βe der Codemodule entsteht eine Zusatzinformation, welche für schwierigere Bereiche, also z.B. Bereiche mit geringen Höhenänderungen im Signal oder verrauschte Bereiche, d.h. insbesondere für den ersten Signalbereich, herangezogen werden kann, um einen korrekten Transfer der Signalenergie zu ermöglichen.

Bevorzugt kann bei dem Verfahren bekannt sein, dass die Größe der Codemodule kleiner als zumindest eines der Bildpixel (oder kleiner als die Bildpixel) ist. Dies kann z.B. einer Decodiervorrichtung als Einstellung mitgeteilt werden.

Sind die Codemodule kleiner und/oder schmaler als die Bildpixel, so wird die maximale Amplitude eines Bildpixels nur erreicht, wenn mehrere gleiche (z.B. weiße) Codemodule derart direkt benachbart angeordnet sind, dass ein gesamtes Bildpixel vollständig abgedeckt ist. Das nächstniedrigere (häufig) wiederkehrende Amplitudenniveau von lokalen Signalmaxima im Eingangssignalverlauf entsteht durch einen "Volltreffer" eines einzelnen weißen Codemoduls in ein Bildpixel. Ebenso entsteht das nächsthöhere (häufig) wiederkehrende Amplitudenniveau von lokalen Signalminima über dem allgemeinen Minimum (wie unten beim Histogramm noch genauer beschrieben) durch Volltreffer eines z.B. schwarzen Codemoduls in ein einzelnes Bildpixel. Diese Amplitudenniveaus geben direkt die Grö-βe, also z.B. die Breite, der Codemodule im Verhältnis zur Pixelgröße an. Beispielsweise bei einem lokalen Maximum von 80% kann rückgeschlossen werden, dass ein weißes Codemodul 80% der Größe bzw. Breite eines Bildpixels besitzt. In entsprechender Weise kann bei einem lokalen Maximum von 30% ermittelt werden, dass ein schwarzes Codemodul 70% (d.h. 100% - 30%) der Größe bzw. Breite eines Bildpixels besitzt.

Das Verfahren kann dementsprechend den Schritt umfassen, die zweithöchsten und/oder zweitniedrigsten mehrfach im Eingangssignalverlauf vorkommenden Werte von Signalbereichen zu ermitteln, wobei aus den Werten dann auf die Grö-βe und/oder Breite der Codemodule des maschinenlesbaren Codes geschlossen wird. Die Größe und/oder Breite der Codemodule kann insbesondere (zur Erzeugung von äquidistanten Signalbereichen im Ergebnissignalverlauf) herangezogen werden, wenn entschieden werden muss welcher Signalbereich als zweiter Signalbereich dienen soll.

Bevorzugt können für die zweithöchsten und/oder zweitniedrigsten mehrfach im Eingangssignalverlauf vorkommenden Werte von Signalbereichen auch zunächst Wertebereiche erfasst werden. Danach kann dann aus den Werten in den Wertebereichen eine Mittelwertbildung oder dergleichen erfolgen, um die Größe und/oder Breite der Codemodule zu bestimmen. Auf diese Weise kann auch aus verrauschten Eingangsbildern die Codemodulgröße bestimmt werden.

In weiteren Schritten kann ein Transferieren der Signalenergie erfolgen, ebenso kann dann die Position der einzelnen Codemodule bzw. der zugehörigen Signalbereiche bestimmt werden, wie hierin beschrieben. Dadurch kann es ermöglicht werden, auch maschinenlesbare Codes zu decodieren, deren Codemodulbreiten unter der Größe der Bildpixel liegen.

Gemäß einer weiteren Ausführungsform umfasst der maschinenlesbare Code einen Strichcode, insbesondere einen Barcode oder einen Zielcode, insbesondere für Briefe, und/oder einen zweidimensionalen Code, beispielsweise einen QR-Code oder einen DataMatrix-Code.

Gemäß einer weiteren Ausführungsform umfasst der maschinenlesbare Code, bevorzugt lediglich, zwei verschiedene Codemodule. Bei den Codemodulen kann es sich beispielsweise um weiße und schwarze Bereiche handeln. Der maschinenlesbare Code umfasst dementsprechend bevorzugt lediglich weiße und schwarze Bereiche.

Gemäß einer weiteren Ausführungsform wird für das Eingangsbild oder einen zur Analyse ausgewählten Bereich im Eingangsbild und/oder den Eingangssignalverlauf ein Histogramm erzeugt, wobei die Abfolge der Werte der Bildpixel durch eine Normierung des Histogramms geändert werden. Es kann also eine Vorverarbeitung stattfinden. Hintergrund der Vorverarbeitung ist, dass das üblicherweise aufgenommene Graubild weder im Schwarzbereich, noch im Weißen in Sättigung geht. Durch eine inhomogene Beleuchtung können unterschiedliche Bildpixel auch heller als andere Bildpixel erscheinen. Aus diesem Grund kann eine Normierung des Histogramms erfolgen, sodass die Werte in dem Histogramm auf die gesamte Breite des Histogramms gestreckt werden. Bei starker Bildinhomogenität können alternativ oder zusätzlich mehrere lokale Histogramme zum Einsatz kommen die Subbereiche des Eingangssignalverlaufs abdecken.

Für die Normierung des Histogramms können insbesondere die folgenden Schritte durchgeführt werden:
- Es wird der Eingangssignalverlauf verwendet, wobei der Eingangssignalverlauf beispielsweise einen Vektor x für die Bildpixel und einen Vektor y für die Signalhöhe umfasst;
- Anschließend kann eine Signalnormierung durchgeführt werden, wobei das Minimum der Signalhöhe gesucht wird und dieser Wert auf z.B. Null gesetzt wird. Zudem wird das Maximum der Signalhöhe gesucht und dieser Wert auf z.B. Eins gesetzt. Diese Werte bilden das allgemeine Maximum bzw. Minimum. Danach können alle Werte der Signalhöhe zwischen Minimum und Maximum im Histogramm normiert werden, insbesondere linear.

Bevorzugt können die beiden obigen Schritte auch für Subbereiche des Eingangssignalverlaufs durchgeführt werden, wobei insbesondere der Vektor x in Subbereiche unterteilt wird, bevorzugt gemäß einer gewünschten Genauigkeit des Ergebnissignalverlaufs. Dabei wird insbesondere für Vektor y jedem Subbereich die jeweilig Signalhöhe 28 zugeordnet, wodurch ein Eingangssignalverlauf mit höherer Auflösung erzeugt werden kann.

Überdies ist es möglich, durch das Anwenden z.B. eines Mittelungsfilters und/oder eines Medianfilters ein Rauschen in dem Eingangsbild zu reduzieren.

Gemäß einer weiteren Ausführungsform erfolgt das maschinelle Erzeugen des Eingangsbilds mittels einer Kamera, wobei die Kamera eine Optik und mehrere Sensorpixel aufweist, wobei der maschinenlesbare Code während der Erzeugung des Eingangsbilds bevorzugt mittels einer Beleuchtungseinrichtung beleuchtet wird. Von dem maschinenlesbaren Code remittierte Strahlung kann durch die Optik geleitet werden und anschließend auf die Sensorpixel auftreffen, wobei die Menge der auf einem jeweiligen Sensorpixel auftreffenden Strahlung in einen Wert eines entsprechenden Bildpixels des Eingangsbilds abgebildet wird. Während der Erzeugung des Eingangsbilds kann die Beleuchtungseinrichtung den maschinenlesbaren Code bestrahlen, um ein rauschärmeres und kontraststärkeres Eingangsbild zu erzeugen bzw. die Signalstärke so beeinflussen dass für die Bildgebung kürzere Belichtungszeiten entstehen um z.B. bei bewegten Codes die Bewegungsunschärfe zu verringern.

Gemäß einer weiteren Ausführungsform definieren die von den Sensorpixeln erzeugten Signale das Eingangsbild, indem die von den Sensorpixeln erzeugten Signale jeweils als Basis für den Wert des zugehörigen Bildpixels dienen. Die von den Sensorpixeln erzeugten Signale können verarbeitet werden, um den Wert des zugehörigen Bildpixels zu erzeugen. Das von den Sensorpixeln erzeugte Signal kann auch direkt als Wert des zugehörigen Bildpixels übernommen werden. Ebenfalls kann die oben erläuterte Vorverarbeitung, beispielsweise durch Normierung des Histogramms, an den von den Sensorpixeln erzeugten Signalen vorgenommen werden.

Weiterer Gegenstand der Erfindung ist eine Decodierungsvorrichtung zur Decodierung eines maschinenlesbaren Codes, mit einer Erfassungseinheit und eine Recheneinrichtung, wobei die Erfassungseinheit zum maschinellen Erzeugen eines Eingangsbilds des maschinenlesbaren Codes ausgebildet ist, wobei das Eingangsbild eine Vielzahl von Bildpixel mit einem jeweiligen Wert aufweist, wobei die Abfolge der Werte der Bildpixel einen Eingangssignalverlauf definiert, wobei der Eingangssignalverlauf Signalbereich umfasst, die jeweils die Signalenergie, insbesondere eines der Bildpixel, bevorzugt eines einzigen der Bildpixel, in einem zugehörigen Signalbereich repräsentieren. Die Recheneinrichtung ist ausgebildet, die Signalenergie zumindest eines ersten Signalbereichs zu einem zweite Signalbereich zu transferieren, wobei durch das Transferieren der Signalenergie ein Ergebnissignalverlauf erzeugt wird. Die Recheneinrichtung ist ferner ausgebildet, den maschinenlesbaren Code anhand des Ergebnissignalverlaufs, d.h. beispielsweise anhand eines Ergebnisbilds, zu decodieren.

Insbesondere kann die Decodiervorrichtung ausgebildet sein, ein Signal auszugeben, das den decodierten Code enthält, also die in dem maschinenlesbaren Code enthaltenen Informationen, insbesondere im Klartext.

Für die erfindungsgemäße Decodiervorrichtung gelten die Ausführungen zum erfindungsgemäßen Verfahren entsprechend. Dies gilt insbesondere hinsichtlich Vorteilen und bevorzugten Ausführungsformen. Überdies versteht es sich, dass die hierin genannten Merkmale und Ausführungsformen untereinander kombinierbar sind, sofern nicht explizit etwas Gegenteiliges angegeben ist.

Nachfolgend wird die Erfindung rein beispielhaft unter Bezugnahme auf die Zeichnungen beschrieben. Es zeigen:
**Fig.1** eine Decodiervorrichtung und einen maschinenlesbaren Code;
Fig. 2A-D Diagramme mit dem Eingangssignalverlauf, Transfersignalen und dem Ergebnissignalverlauf;
**Fig. 3** ein Eingangsbild eines zweidimensionalen Codes und zugehörige Histogramme.

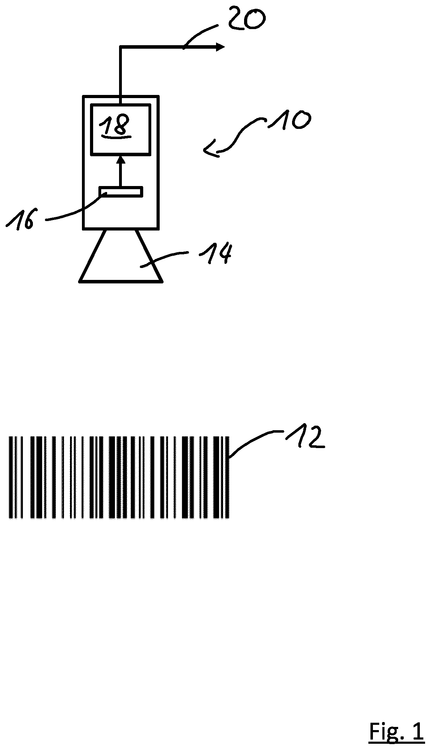

Figur 1 zeigt eine Decodiervorrichtung 10, welche auf einen maschinenlesbaren Code 12 in der Form eines Barcodes gerichtet ist. Über eine (nicht gezeigte) Beleuchtungseinrichtung der Decodiervorrichtung 10 wird der Barcode 12 beleuchtet. Von dem Barcode 12 stammendes Licht wird durch eine Optik 14 auf eine Erfassungseinheit 16 geleitet, welche eine Vielzahl von Sensorpixeln umfasst. Die Erfassungseinheit erzeugt ein Eingangsbild des Barcodes 12 und übermittelt das Eingangsbild an eine Recheneinrichtung 18.

Die Recheneinrichtung 18 führt die nachfolgend erläuterten Schritte zur Decodierung des Barcodes 12 aus und gibt ein Decodierungsergebnis mittels einer Datenschnittstelle 20 aus. Das Decodierungsergebnis kann beispielsweise den in dem Barcode 12 enthaltenen Text oder die in dem Barcode 12 enthaltene Zahlenfolge im Klartext enthalten.

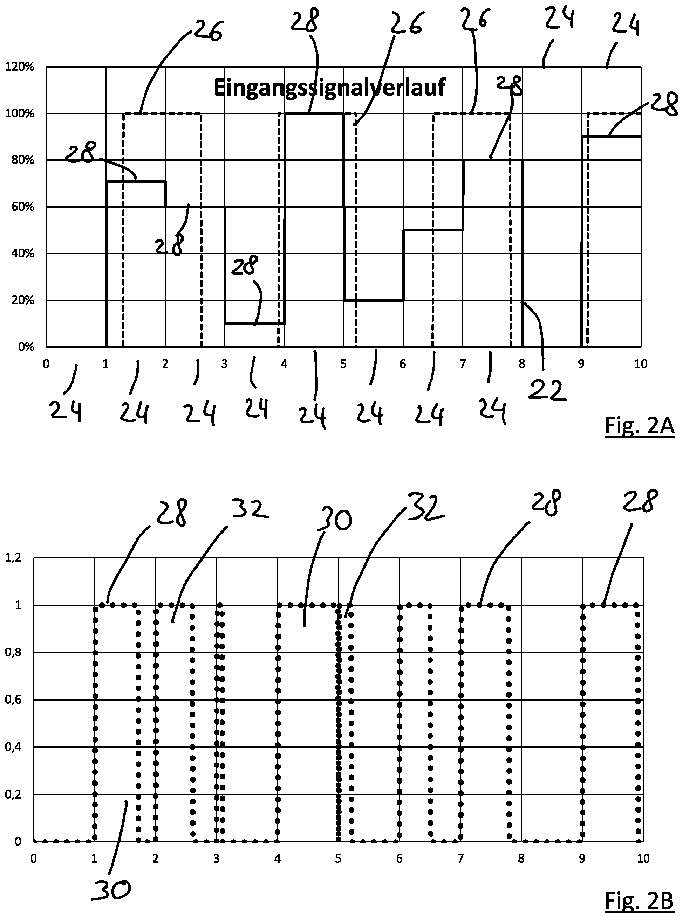

Figur 2A zeigt einen Eingangssignalverlauf 22, welcher über zehn Bildpixel 24 aufgetragen ist. Die Bildpixel sind dabei auf der X-Achse angetragen, wobei ein erster Bildpixel 24 im Bereich zwischen 0 und 1 auf der X-Achse, ein zweiter Bildpixel 24 im Bereich zwischen 1 und 2 auf der X-Achse und ein dritter Bildpixel im Bereich zwischen 2 und 3 auf der X-Achse angeordnet sind. Die übrigen Bildpixel 24 sind entsprechend angeordnet. Im hier erläuterten Beispiel entsprechen die Bildpixel 24 eins zu eins den (nicht gezeigten) Sensorpixeln.

In Figur 2A sind zudem als gestrichelte Linie Codemodule 26 des Barcodes 12 dargestellt. Wie zu erkennen ist, wechseln sich in dem gezeichneten Bereich wei-βe und schwarze Codemodule 26 gleicher Breite ab, wobei jeweils nur die weißen Codemodule 26 mit Bezugszeichen versehen sind. Im Folgenden wird auch nur auf die weißen Codemodule 26 eingegangen. Ein jeweiliges Codemodule 26 besitzt eine Breite von etwa 1,3 Bildpixeln.

Das Codemodul 26, welches sich im Bereich des zweiten und dritten Bildpixels 24 befindet, überdeckt 70 % des zweiten Bildpixels 24 und 60 % des dritten Bildpixels 26. Dementsprechend ist der (Helligkeits-)Wert des zweiten Bildpixels 70 % und der Wert des dritten Bildpixels 60 %. Beide Werte ergeben zusammen 130% eines Bildpixels was zur oben genannten Breite des Codemoduls von 1,3 Bildpixeln korreliert.

Als weiteres Beispiel ist der fünfte Bildpixel 24 vollständig von einem Codemodul 26 überlagert, sodass der dem fünften Bildpixel 24 zugeordnete Wert 100 % beträgt. Das sechste Bildpixel 24 hingegen wird nur zu 20 % von einem Codemodul 26 überlagert, sodass der dem sechsten Bildpixel 24 zugeordnete Wert lediglich 20 % ist. Zusammen mit dem vierten Bildpixel 24 (10%) ergibt sich auch hier die Korrelation zur Codemodulbreite von 1,3 Bildpixeln (100% + 20% + 10%).

Es ist zu erkennen, dass der Eingangssignalverlauf 22 im Bereich eines Bildpixels 24 jeweils konstant ist. Ein solcher konstanter Bereich wird als Signalbereich 28 bezeichnet.

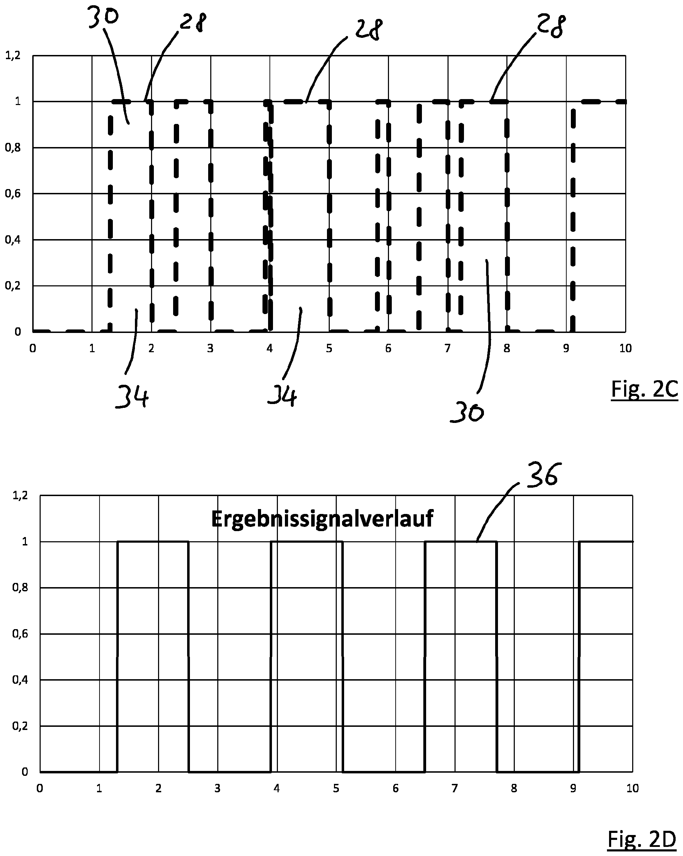

Zur Vorbereitung des Transferierens der Signalenergie wird nun für jeden Signalbereich die Höhe des Eingangssignalverlaufs auf einen vorbestimmten Maximalwert angehoben, welche im vorliegenden Beispiel "1" ist. Dies ist in Figur 2B und 2C gezeigt, wobei in Figur 2B der angehobene Signalverlauf für jeden Signalbereich an die linke Grenze des jeweiligen Bildpixels 24 verschoben ist, wohingegen in Figur 2C eine Verschiebung an die rechte Grenze erfolgt ist. Die Figuren 2B und 2C zeigen dementsprechend Transfersignale.

Es ist zu erkennen, dass die Breite der Signalbereiche verringert ist, sodass die durch jeden Signalbereich 28 repräsentierte Signalenergie 30 (entsprechend der Fläche unter dem Signalbereich 28) gleich bleibt.

Anschließend wird algorithmisch für jeden Signalbereich festgelegt, ob es sich bei dem jeweiligen Signalbereich 28 um einen erste Signalbereich 32 oder um einen zweite Signalbereich 34 handelt. Bei benachbarten Signalbereichen 28 wird derjenige Signalbereich 28 mit der geringeren Signalenergie 30 als erster Signalbereich 32 und der Signalbereich 28 mit der höheren Signalenergie 30 als zweiter Signalbereich 34 bestimmt.

Nach der Bestimmung des ersten und zweiten Signalbereichs 32, 34 wird dann algorithmisch festgelegt, ob der an die rechte oder an die linke Grenze verschobene Signalbereich in einen Ergebnissignalverlauf 36 (siehe Figur 2B) übernommen werden soll. Die Auswahl erfolgt dabei derart, dass erster und zweiter Signalbereich 32, 34 danach direkt aneinander angrenzen. Im hier gezeigten Beispiel wird der nach links verschobene Signalbereich 28 des dritten Bildpixels 24 als erster Signalbereich 32 und der nach rechts verschobene Signalbereich 28 des zweiten Bildpixels als zweiter Signalbereich 34 verwendet. Aus diesen beiden Signalbereichen 32, 34 zusammengenommen ergibt sich ein Bereich im Ergebnissignalverlauf 36, welcher sehr exakt der Position und dem Verlauf des zugehörigen Codemoduls 26 aus Figur 2A entspricht.

Weiter beispielsweise wird der Signalbereich 28 des sechsten Bildpixels 24 als erster Signalbereich 32 verwendet (Fig. 2B). Da das fünfte Bildpixel 24 einen Wert von 100 % besitzt, füllt der entsprechende Signalbereich 28 den Bereich des Bildpixels 24 vollständig aus, sodass kein Unterschied zwischen der Verschiebung nach rechts und links besteht. Rein beispielhaft wird angenommen, dass der nach rechts verschobene Signalbereich 28 im Bereich des fünften Bildpixels 24 als zweiter Signalbereich 34 verwendet wird. Zusammen mit dem schmalen Signalbereich des vierten Bildpixels (Fig. 2C) geben diese Signalbereiche 28 zusammengenommen sehr genau die Position und die Breite des Codemoduls 26 im Bereich des fünften Bildpixels 24 wieder, wie in Figur 2D gezeigt. Der Signalbereich 28 in Figur 2D ist dabei breiter als der ursprüngliche Signalbereich 28 im Bereich des fünften Bildpixels 24. Auch reicht der so geschaffene Signalbereich 28 in den Bereich des ursprünglichen ersten Signalbereichs 32 hinein.

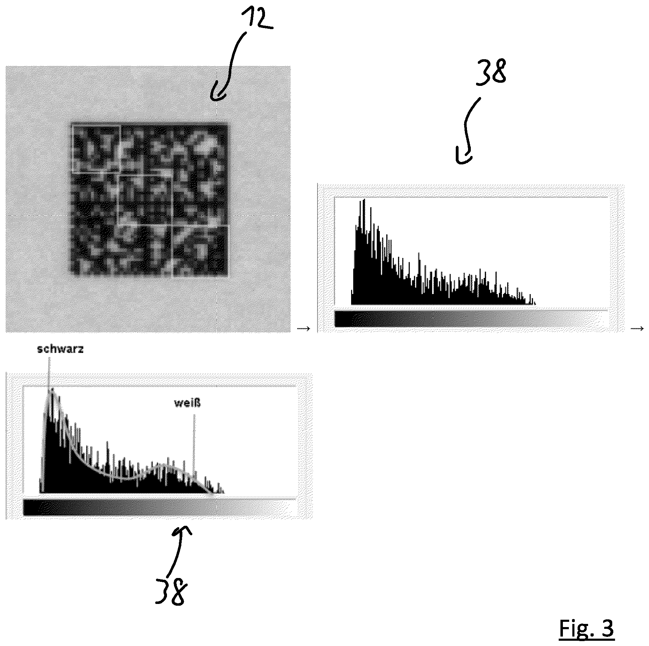

Vor der Erstellung des Eingangssignalverlaufs 22, wie in Figur 2A gezeigt, kann z.B. eine Mittelwertfilterung und/oder eine Medianfilterung erfolgen. Überdies kann eine Normalisierung anhand eines Histogramms erfolgen. Beispielhaft ist in Figur 3 ein zweidimensionaler maschinenlesbarer Code 12 gezeigt. Es ist zu erkennen, dass der maschinenlesbarer Code 12 aufgrund der Beleuchtung und der Abbildungsgenauigkeit verwaschen wirkt. Dementsprechend ist auch das dort gezeigte Histogramm 38 derart ausgebildet, dass keine Sättigung im Schwarzen und im Weißen erzielt wird. Bei der Normierung des Histogramms, wie oben erläutert, kann das Histogramm derart gestreckt werden, dass sämtliche Werte zwischen schwarz und weiß dann in dem Eingangssignalverlauf vorkommen. Die gegebenenfalls verrauschten Histogrammverläufe können optional mit Mittelungsverfahren (z.B. Medianfilter, gleitender Mittelwert) geglättet werden.

Es ist zu erkennen, dass durch das Transferieren der Signalenergie der Ergebnissignalverlauf 36 in Figur 2D deutlich genauer den Codemodulen 26 des maschinenlesbaren Codes 12 entspricht als der Eingangssignalverlauf 22 aus Figur 2A. Es kann somit eine deutlich genauere und zuverlässigere Decodierung des maschinenlesbaren Codes 12 erfolgen. Dies ist sogar dann möglich, wenn der maschinenlesbarer Code 12 gekippt, d.h. schräg, angeordnet ist.

### Bezugszeichenliste

10 Decodiervorrichtung
12 Barcode
14 Optik
16 Erfassungseinheit
18 Recheneinrichtung
20 Datenschnittstelle
22 Eingangssignalverlauf
24 Bildpixel
26 Codemodul
28 Signalbereich
30 Signalenergie
32 erster Signalbereich
34 zweiter Signalbereich
36 Ergebnissignalverlauf
38 Histogramm

## Patentansprüche

1. Verfahren zur Decodierung eines maschinenlesbaren Codes (12), umfassend
- maschinelles Erzeugen eines Eingangsbilds des maschinenlesbaren Codes (12), wobei das Eingangsbild eine Vielzahl von Bildpixeln (24) mit einem jeweiligen Wert aufweist, wobei die Abfolge der Werte der Bildpixel (24) einen Eingangssignalverlauf (22) definiert, wobei der Eingangssignalverlauf (24) Signalbereiche (28) umfasst, die jeweils die Signalenergie in einem zugehörigen Signalbereich (28) repräsentieren,
- Transferieren der Signalenergie zumindest eines ersten Signalbereichs (32) zu einem zweiten Signalbereich (34), wobei durch das Transferieren der Signalenergie ein Ergebnissignalverlauf (36) erzeugt wird,
- Decodieren des maschinenlesbaren Codes (12) anhand des Ergebnissignalverlaufs (36).

2. Verfahren nach Anspruch 1,
wobei die von dem zumindest einen ersten Signalbereich (32) an den zweiten Signalbereich (34) transferierte Signalenergie dem zweiten Signalbereich (34) hinzugefügt und/oder aus dem ersten Signalbereich (32) entfernt wird.

3. Verfahren nach Anspruch 1 oder 2,
wobei die Höhe des Eingangssignalverlaufs (22) in dem zweiten Signalbereich (34) auf einen vorbestimmten Maximalwert angehoben wird, wobei die durch den zweiten Signalbereich (34) repräsentierte Signalenergie bevorzugt konstant bleibt.

4. Verfahren nach Anspruch 3,
wobei die Signalenergie des zumindest einen ersten Signalbereichs (32) in ein Transfersignal mit Höhe des vorbestimmten Maximalwerts umgewandelt wird.

5. Verfahren nach zumindest einem der vorstehenden Ansprüche,
wobei durch das Transferieren der Signalenergie der zweite Signalbereich (34) in dem Ergebnissignalverlauf (36) verbreitert wird.

6. Verfahren nach zumindest einem der vorstehenden Ansprüche,
wobei ein Übergang zwischen dem zweiten Signalbereich (34) des Ergebnissignalverlaufs und eines weiteren Signalbereichs (28) des Ergebnissignalverlaufs (38) innerhalb eines Signalbereichs (28) des Eingangssignalverlaufs (28) liegt.

7. Verfahren nach zumindest einem der vorstehenden Ansprüche,
wobei der Eingangssignalverlauf (22) Werte für einen eindimensionalen oder zweidimensionalen Bereich definiert.

8. Verfahren nach zumindest einem der vorstehenden Ansprüche,
wobei der erste Signalbereich (32) in dem Eingangssignalverlauf (22) zumindest zwei benachbarte Signalbereiche (28) besitzt, wobei derjenige benachbarte Signalbereich (28) als zweiter Signalbereich (34) ausgewählt wird, welcher den geringsten Unterschied der Signalenergie zu dem ersten Signalbereich (32) aufweist.

9. Verfahren nach zumindest einem der vorstehenden Ansprüche,
wobei der maschinenlesbare Code (12) einen Strichcode, insbesondere einen Barcode oder einen Zielcode, und/oder einen zweidimensionalen Code, beispielsweise einen QR-Code oder einen DataMatrix-Code, umfasst und/oder wobei der maschinenlesbare Code (12), bevorzugt lediglich, zwei verschiedene Codemodule (26) umfasst.

10. Verfahren nach zumindest einem der vorstehenden Ansprüche,
wobei für das Eingangsbild und/oder den Eingangssignalverlauf (22) ein Histogramm (38) erzeugt wird, wobei die Abfolge der Werte der Bildpixel (24) durch eine Normierung des Histogramms (38) geändert werden.

11. Verfahren nach zumindest einem der vorstehenden Ansprüche,
wobei das maschinelle Erzeugen des Eingangsbilds mittels einer Kamera erfolgt, welche eine Optik (14) und mehrere Sensorpixel aufweist, wobei der maschinenlesbare Code (12) während der Erzeugung des Eingangsbilds bevorzugt mittels einer Beleuchtungseinrichtung beleuchtet wird.

12. Verfahren nach Anspruch 11,
wobei die von den Sensorpixeln erzeugten Signale das Eingangsbild definieren, indem die von den Sensorpixeln erzeugten Signale jeweils als Basis für den Wert des zugehörigen Bildpixels (24) dienen.

13. Decodiervorrichtung zur Decodierung eines maschinenlesbaren Codes (12),
mit einer Erfassungseinheit (16) und einer Recheneinrichtung (18), wobei die Erfassungseinheit (16) zum maschinellen Erzeugen eines Eingangsbilds des maschinenlesbaren Codes (12) ausgebildet ist, wobei das Eingangsbild eine Vielzahl von Bildpixeln (24) mit einem jeweiligen Wert aufweist, wobei die Abfolge der Werte der Bildpixel einen Eingangssignalverlauf (22) definiert, wobei der Eingangssignalverlauf (22) Signalbereiche (28) umfasst, die jeweils die Signalenergie in einem zugehörigen Signalbereich (28) repräsentieren,
wobei die Recheneinrichtung (18) ausgebildet ist,
- die Signalenergie zumindest eines ersten Signalbereichs (32) zu einem zweiten Signalbereich (34) zu transferieren, wobei durch das Transferieren der Signalenergie ein Ergebnissignalverlauf (36) erzeugt wird,
- den maschinenlesbaren Code (12) anhand des Ergebnissignalverlaufs (36) zu decodieren.
